# EUROPEAN PATENT APPLICATION

(11) **EP 4 657 379 A1**
(43) Date of publication of application: **03.12.2025**
(21) Application number: 24179044.3
(22) Date of filing: 30.05.2024
(51) Int. Cl.: G06T 11/00

(54) **HYBRID INTELLIGENCE FOR KNOWLEDGE DRIVEN SYNTHESIS OF REALISTIC LESIONS**

(71) Applicant: Koninklijke Philips N.V., 5656 AG Eindhoven (NL)
(72) Inventor: BARAGONA, Marco, Eindhoven (NL); BUERGER, Christian, Eindhoven (NL); KOLOKOLNIKOV, Georgii, 5656AG Eindhoven (NL); WISSEL, Tobias, Eindhoven (NL); BAKKER, Bart Jacob, Eindhoven (NL); EILON, Ehud, Eindhoven (NL); PORAT, Hadar, Eindhoven (NL)
(74) Representative: Philips Intellectual Property & Standards

(57) **Abstract**

A computer-implemented method for generating synthetic lesion image data (40), the method comprising the following steps: receiving organ image data (10) of an organ; generating or obtaining lesion model data (20), the lesion model data (20) being generated based on a collection of rules for lesion shapes and textures and/or based on a defined range of lesion shapes and textures, wherein the lesion model data (20) comprises in particular a lesion mask (21), such as for the synthesis location, and a texture condition (22) for the synthesis texture; applying a trained generative machine learning model on the organ image data (10) together with the lesion model data (20) to generate synthetic lesion image data (40) comprising at least one region with a lesion (41); and providing the synthetic lesion image data (40).

## Description

### FIELD OF THE INVENTION

The invention relates to a computer-implemented method for generating synthetic lesion image data, a corresponding computer program, an image processing device, and a computer program comprising synthetic lesion image data.

### BACKGROUND OF THE INVENTION

Accurate and automatic detection and/or segmentation of different types of lesions, in particular tumours, can be an enabler for reliable lesion diagnosis and therapy selection and planning. However, the detection and segmentation of lesions, in particular tumours, in medical images of an organ, such as CT images of liver, can be very challenging, particularly in the presence of metastases. One way of performing or supporting diagnosis could be via an implementation of artificial intelligence (AI) based methods. In order to achieve good performance, AI-based methods aiming at this task typically require large datasets representative of the diversity of cases to be expected in real clinical practice. Besides regulatory and privacy issues that strongly limit the size of available datasets, suitable data availability is also challenging because of a large diversity of contrasts between lesion and organ, e.g. tumour and liver, need of handling both contrasted and non-contrasted data, a large variety and complexity of lesions (e.g. concerning size, type, shape, location), and a high imbalance of data (e.g. benign - malignant lesions).

Accordingly, there is a need for a way of acquiring and/or generating large datasets having a large variety and good quality.

### OBJECT OF THE INVENTION

It is, therefore, an object of the invention to address the above-mentioned problems, in particular to provide a method for generating larger and more diverse datasets of lesion images and/or to enable training of AI-based methods for automatically detecting and/or segmenting different types of lesions.

### SUMMARY OF THE INVENTION

To better address this object, a method according to claim 1, a computer program according to claim 13, an image processing device according to claim 14 and a computer program according to claim 15 are provided. Advantageous embodiments are set out in the dependent claims. Any features, advantages or alternative embodiments described herein in relation to the claimed method are also applicable to the other claim categories and vice versa.

According to a first aspect, a computer-implemented method for generating synthetic lesion image data is provided. The method comprises the following steps:
- receiving organ image data of an organ;
- generating or obtaining lesion model data, the lesion model data being generated based on a collection of rules for lesion shapes and textures and/or based on a defined range of lesion shapes and textures, wherein the lesion model data comprises in particular a lesion mask, such as for the synthesis location, and a texture condition for the synthesis texture;
- applying a trained generative machine learning model on the organ image data together with the lesion model data to generate synthetic lesion image data comprising at least one region with a lesion;
- providing the synthetic lesion image data.

By combining the lesion model data with the application of a trained generative machine learning model, a hybrid way of image generation combining knowledge and artificial intelligence is used to provide better results. Advantageously, via this method large datasets of synthetic lesion image data may be generated, wherein the image data may be realistic and diverse as well as representative of even rare examples of lesions, e.g. rare cancer presentations. In particular via using the lesion model data, data diversity may be ensured. For example, the method may be used to generate large synthetic datasets, optionally with matching annotations. The large synthetic datasets may, for example, be used for training and/or benchmarking of algorithms for tumour segmentation. Furthermore, the datasets may be used to support tools for educational purpose, e.g. for teaching of site-specific workflows for thermal ablation therapy and/or for teaching different appearances of lesion/tumour types in relation to diagnosis and therapy selection. Furthermore, the synthetic lesion image data may be used for training of algorithms that aim a lesion, in particular tumour, diagnosis and/or classification.

The inventive method may generally be applied to any imaging modality. Hence the organ image data may be image data from any imaging modality, in particular medical imaging modality. For example, the organ image data may be computed tomography (CT) organ image data. Alternatively, the organ image data may be, for example, based on ultrasound, magnetic resonance (MR) or positron emission tomography (PET) imaging. The organ image data may be based on a combination of imaging modalities, such as MR-PET or PET-CT. Accordingly, the synthetic lesion image data may simulate image data from a corresponding imaging modality.

A lesion may generally be any damage or abnormal change in the organ, in particular in the tissue of the organ. A lesion may, for example, be caused by an injury or a disease. In the context of this invention, a lesion may in particular be a tumour. In the context of this invention, when a lesion is mentioned, the term lesion may generally optionally be replaced by the more specific term tumour. Hence, the invention is particularly suited to simulate synthetic tumour image data. However, the invention may also be used for other types of lesions, such as fractures, aneurysms, multiple sclerosis lesions, bone metastases, or stenoses.

Image data, such as organ image data or lesion image data, may, for example, comprise two-dimensional, three-dimensional and/or four-dimensional image data. The image data may, for example, be x-ray-based image, in particular computed tomography image data. The term "generating synthetic lesion image data" as used herein is to be understood broadly and generally describes the generation of lesion image data completely or partially via an artificial generation. In the context of this invention an artificial generation comprises the application of a trained generative machine learning model.

The method comprises receiving organ image data, i.e. organ image data of an organ. For example, the organ image data may be received from a database and/or via user input. The database may be an internal database of a computer system that performs the method or an external database. The organ image data may be used as a high-quality, ideally artefact-free, real-world background for the image synthesis. However, optionally, the organ image data may also be synthetic image data. The organ image data may have the function of providing carrying anatomies for the synthetic lesion image data. Using organ image data as a basis for the generation of the synthetic lesion image data may allow for better image results, potentially reducing image artifacts in the synthetic lesion image data. Generally, any organ may be supported by the method. Hence the organ of the organ image data may be any organ. Optionally, the organ image data may comprise image data of a plurality of organs. For example, the organ may be a liver.

Furthermore, lesion model data is generated or obtained. The lesion model data may for example be obtained by receiving the lesion model data from an external source, such as from an external database. For example, the lesion model data may be based on corresponding model data from another source, such as from at least one subject. A subject may for example be a human being, such as a patient, or an animal. The lesion model data may have been prepared, i.e. generated, previously, i.e. before applying the inventive method. Alternatively, the lesion model data may be generated as part of the method itself. The term "lesion model data" may generally describe any type of lesion model, that describes a lesion at least partially. The lesion model data is generated based on a collection of rules for lesion shapes and textures and/or based on a defined range of lesion shapes and textures. The collection of rules may, for example, be extracted from literature, in particular specialized literature on the subject of lesions. The range of lesion shapes and textures may, for example, be based on real image data of lesions. In particular, the collection of and the defined range of lesion shapes and textures may be combined to generate the lesion model data. For example, tumour metastases may be supported through shape mask granularity. The lesion model data may advantageously input a knowledge component to the synthetic lesion image data which allows a greater diversity of lesion image data, even comprising rare cases that may not be sufficiently represented in real image data. Furthermore, via the lesion model data, physiological consistency may be improved. In particular, the lesion model may comprise a lesion mask and a texture condition. The lesion mask may in particular define the shape and/or the area of the lesion in the synthetic lesion image data. The texture condition may define the texture of the lesion in the synthetic lesion image data.

A trained generative machine learning model is applied on the organ image data together with the lesion model data. The term "trained generative machine learning model" is to be understood broadly in the context of this invention. It generally describes a machine learning model that is adapted to perform the generation of data, in particular image data. For example, image data may be generated by image-to-image translations from input image data. In the context of this disclosure, the input image may in particular be the organ image data. The lesion model data may be input into the trained generative machine learning model as conditional label. Generally, the organ image data and the lesion model data are input parameters for the trained generative machine learning model. Based on the input, the generative machine learning model is trained to generate synthetic lesion image data. The area and/or shape in the organ image data defined by the lesion mask may be is replaced and/or changed to comprise the lesion as defined by the lesion model data. In particular, the generative machine learning model may be trained to generate the synthetic lesion image data by inpainting the lesion model data into the organ image data. For example, the synthetic lesion image data may be provided by storing it on a storage device, sending it to another device via a network, and/or displaying it on a screen.

According to an embodiment, the lesion model data is voxelized prior to applying the trained generative machine learning model on it. Voxelizing can be understood to be a conversion of objects from a continuous geometric representation into a set of voxels that approximate the continuous object. For example, the lesion model data may represent the shape of the lesion via a mesh, in particular as surface-based mesh, and, via the voxelization, the mesh may be transformed into voxels. For the voxelization a voxelization algorithm may be applied. Voxelization algorithms are generally known in the state of the art. It has been found that the voxelization may help to achieve better results when applying the trained generative machine learning algorithm.

According to an embodiment, the lesion model data is one-hot encoded prior to applying the trained generative machine learning model on it. For example, one-hot encoding may comprise that a background is given the number 0 and the lesion, in particular tumour, area or volume is given the number 1. It has been found that applying the one-hot encoding may lead to particular good results in the context of this method. Optionally, additional conditions may be used as input for the generative machine learning model. For example, a class of a tumour, such as benign or malignant tumour may be added as condition. Different classes of the tumour may lead to different contrast levels of a tumour.

According to an embodiment, the collection of rules is based on literature knowledge about lesion shapes and/or textures and/or the defined range of lesion shapes and textures is based on a database of real lesion image data. Literature knowledge may comprise parameter values concerning lesion shapes, in particular tumour shapes. Literature knowledge about textures may, for example, be based on typical literature description of textures in images, in particular with respect to a particular imaging modality. Accordingly, the lesion shape of the lesion model data may be generated based on known parameter ranges of lesions or types of lesions. The literature knowledge may be specifically chosen based on the location of the lesion and/or the particular organ of the organ image data. For example, a range of typical volumes of liver lesions and/or an average volume of liver lesions may be extracted from literature knowledge. Advantageously, using the knowledge from literature may allow to base the synthetic lesion image data not only on a trained model but also on analytically generated shapes based on the knowledge. For example, the database of real lesion image data may be used to construct an average lesion shape and/or a range of lesion shapes. For example, the database of real lesion image data may be used to construct an average lesion texture and/or a range of lesion textures.

According to an embodiment, literature knowledge comprises one or more of the following: definitions of typical volumetric sizes of lesions, typical localisations within the target organ, typical shape descriptors. For example, a shape descriptor may comprise a combination of geometrical features, such as overlapping spheres or ellipses. Shape descriptors may be used to analytically generate a lesion shape of the lesion model data.

According to an embodiment, the lesion model data is based on an average lesion shape and an intra-cohort shape variation extracted from real lesion image data.

According to an embodiment, the database of real lesion image data comprises annotated lesion image data with annotated lesions. For example, the annotated lesions may be voxel annotations. Additionally, generating the lesion model data, the lesion model data comprising at least the lesion mask, may comprise:
- representing the annotated lesions as surface-based meshes;
- computing an average lesion shape based on the meshes in order to obtain an average shape prior;
- registering from the meshes to the shape prior in order to obtain registered annotated meshes defined in the coordinate system of the shape prior; registering may in particular be based on a mesh-to-mesh registration, for example, rigid or affine,
- based on the average shape prior and the registered annotated meshes, computing an intra-cohort shape variation, wherein the shape variation lies within a range of lesion shapes defined at least by the shapes of the annotated meshes, wherein the lesion mask is defined according to the shape variation. In particular, borders of the lesion mask may correspond to the shape variation. For example, computing an intra-cohort shape variation may be based on using a principal component analysis (PCA). Hence, the lesion model data may comprise an active shape model, wherein the active shape model allows in particular to synthesize not-existing but anatomically plausible lesion shape variations as observed in the reference cohort, i.e., the database of real lesion image. The shape variation may in particular be seen as an exemplary lesion shape. For example, the shape variation may be voxelized prior to being used as input for the trained generative machine learning model.

According to an embodiment, the defined range of lesion shapes is further based on an adaption derived from the collection of rules. Hence, the lesion shape may be adapted based on the literature knowledge. This may for example be useful, if the database of real lesion image data does not comprise all possible variations as known from literature. Hence, a richer and more complete variance of synthetic lesion model data may be generated by combining literature knowledge with information from real lesion image data. For example, in literature there may be the knowledge that lesions may actually appear in additional shapes and/or sizes compared to the available database of real lesion image data. Hence the defined range of lesion shapes may be adapted accordingly. In particular, a possible bias, e.g. caused by a small amount of available image data, may be corrected via literature knowledge. On the other hand, the combination of basing the range of lesions shapes on real image data may enable a particularly realistic lesion model.

According to an embodiment, the trained generative machine learning model is based on a conditioned Generative Adversarial Network architecture or a latent diffusion model. A GAN may, for example, be trained using paired images in order to learn to generate a target image from an input image. In the context of this disclosure, the input image may in particular be organ image data, in particular without a lesion. The target image is in particular image data comprising a lesion. The GAN is composed of a generator and a discriminator. The generator creates synthetic images from the input image, and the discriminator aims to differentiate the synthetic images, i.e. the generated synthetic lesion image data, from real images, i.e. real lesion image data. Optionally, the GAN may be based on spatially adaptive normalization. The GAN may comprise an effective layer for synthesizing images based on an input semantic layout. Furthermore, each normalization layer may use a label mask to modulate the layer activations. For example, The GAN may be a spatially adaptive denormalization GAN such as SPADE GAN described by Park et al. in "Semantic image synthesis with spatially-adaptive normalization." Proceedings of the IEEE/CVF conference on computer vision and pattern recognition. 2019. Alternatively, convolution layers in the SPADE block may be replaced by a guided sampling, in particular using a class adaptive denormalization GAN. This may result in fewer neural network parameters and lower computational cost while still providing comparable performance. Such a modification is described by Tan et al. in "Efficient semantic image synthesis via class-adaptive normalization." IEEE Transactions on Pattern Analysis and Machine Intelligence, 2021. Diffusion models are generative models that can be used to generate new data such as new image data. Diffusion models are based on adding and removing noise on a given set of training sample data and consecutively, after training, generating new sample data from random noise. In the present disclosure, a diffusion model may be used to generate synthetic lesion image data. During training of the diffusion model, in a diffusion process noise is added to a reference image, in this case to the organ image data, at multiple timesteps, thereby rendering the reference image noisy step by step, until, typically, the output of this diffusion process is a distribution that is completely noisy. In a reverse process, a denoising network of the diffusion model is trained to gradually remove the noise in order to obtain a denoised image corresponding to the reference image and thereby reverse the application of noise. For example, the denoising network may be based on a U-Net structure. During the training, the reversion is approximated by adapting trainable parameters of the denoising network. The reverse process may be associated with a condition. The condition may, for example, comprise a lesion mask, a texture condition and/or any other condition as described herein. After training, new synthetic image data, in particular synthetic lesion image data, may be generated from random noise using the trained reverse process of the trained diffusion model. Preferably, the diffusion model is a latent diffusion model. The general concept of a latent diffusion model is described in by R. Rombach et al. in "High-resolution image synthesis with latent diffusion models." Proceedings of the IEEE/CVF Conference on Computer Vision and Pattern Recognition. 2022. Advantageously, latent diffusion models are typically able to accept more conditions and the condition embeddings are less entangled in a latent space, in particular compared to GAN models. Furthermore, a latent diffusion model may allow a fine-grained control over the generation process

According to an embodiment, the lesion model data, in particular the lesion mask, is generated via a trained lesion-mask-generating machine learning model, wherein the lesion-mask-generating machine learning model has been trained based on the database of real lesion image data. Optionally, the lesion-mask-generating machine learning model is a conditioned model adapted to apply lesion parameters as condition for the lesion mask generation. The lesion-mask-generating machine learning model may be used to learn particular lesion shapes in a data driven way. For example, given a set of N local lesion masks, a lesion-mask-generating machine learning model may be trained to invent lesion masks and/or lesion shapes being representative for the reference cohort but flexible enough to generate new lesion masks and/or lesion shapes. For example, the lesion-mask-generating machine learning model may be based on a generative adversarial network (GAN). In particular the GAN may be a conditioned GAN, such as a conditioned GAN based on a SPADE GAN. The conditions may in particular be lesion parameters. Lesion parameters may, for example, comprise a volumetric size, a simple geometric shape, and/or random seeds. Alternatively, an unconditioned GAN may be used. For example, the unconditioned GAN may be based on random seeds within the GAN's network architecture. Advantageously, the lesion-mask-generating machine learning model may be trained with existing, e.g. pre-generated lesion masks, and the be used to generate more lesion masks.

According to an embodiment, a further input for the trained generative machine learning model comprises at least one additional condition, the at least one additional condition comprising in particular one or more of the following:
- at least one inner-organ structure mask, optionally distinguishing different phases of contrast filling,
- the organ texture depending on a medical condition,
- a virtual time point of the synthetic lesion image data, the time point being relative to a virtual occurrence relevant for lesion imaging, such as an applied injection of contrast agent,
- a lesion type and/or classification,
- a lesion location that is generated based on a lesion location distribution and/or a lesion location probability map,
- an organ boundary condition, in particular a segmentation of the organ.

The inner-organ structure mask may in particular be an inner-organ structure mask of the organ of the organ image data. The inner-organ structure mask may optionally be a vessel mask. For example, the inner-organ structure mask may be a liver inner-organ structure mask. The inner-organ structure mask may in particular be an additional structure within the organ, where the lesion, in particular tumour, is to be inserted into. Distinguishing different phases of contrast filling may be useful to create matching sequences of contrast enhancement. Depending on a medical condition, different organ textures may be provided. The organ textures may be defined based on a position, such as proximal and/or distal to a lesion, in particular tumour. The medical condition is in particular a medical condition of a patient, such as liver cirrhosis. For example, the medical condition may comprise a cancer stage. A virtual time point may be used to provide time-dependent appearance of the synthetic lesion image data. For example, depending on the time that has passed after an injection of contrast agent, the appearance of the image data may vary. Hence, the virtual time point may be a time delay after injection of a contrast agent. By taking into account the time delay after injection of a contrast agent, a contrast-dependant lesion appearance may be generated, for example, in the portal-venous or arterial phases. Additionally or alternatively, the virtual time point may be relative to a patient phase, such as a cyclic phase (e.g. arterial phase). A lesion classification may, for example, be a classification of a benign or malignant tumour. A lesion location may, for example, be based on literature knowledge, in particular based on lesion distributions being described in the literature. Additionally or alternatively, typical locations of lesions within a target organ could be drawn from literature or learned based on a database of lesion image data. For example, based on the typical locations of lesions at least one volumetric probability map of lesion locations may be generated. The at least one volumetric probability map of lesion locations may be as condition that functions as a guide for the generative machine learning model to position lesions towards regions where such lesions are mostly expected. The probability map may be used to randomize the location according to the probabilities of the probability map to generate non-deterministic lesion locations, in particular in consecutive applications of the method. Hence, a better variation of locations may be achieved when generating multiple synthetic lesion image data. The organ boundary condition may be a condition describing the boundaries of the organ of the organ image data. Via the organ boundary condition, in particular organ segmentation, a region defined for lesion placement may be defined, in particular a region within the organ defined by the organ boundary condition. Advantageously, this condition may be used to ensure intra-organ lesion placement only. This may be useful if, for example, a segmentation of the organ is available. Optionally, the organ boundary condition may be combined with the lesion location distribution and/or lesion location probability map.

According to an embodiment, the lesion model data is further based on a lesion growth model, optionally combined with a treatment response model, such that the synthetic lesion image data comprises a lesion at a particular lesion growth state and/or after a particular treatment. In particular, a series of synthetic lesion image data may be generated representing different growth states and/or treatment responses to different treatments and/or different treatment durations by applying the trained generative machine learning model multiple times on different lesion model data based on the lesion growth model. The growth model may be any growth model as known in the state of the art. For example, the growth model may be derived from literature again, such as from clinical studies describing such evolutions. For example, a growth model as described by Yin, A et al, in "A review of Mathematical Models for Tumor Dynamics and Treatment Resistance Evolution of Solid Tumors", CPT Pharmacometrics Syst Pharmacol, 2019 Oct;8(10):720-737 may be applied. The growth model, optionally combined with a treatment response model, may be used to predict and illustrate possible longitudinal tumour evolution, optionally also depending on treatment choices. This may, for example be useful for educational purposes, e.g. to provide educational data showing the evolution of tumour growth and/or the effects of treatment. Optionally, the growth model may be combined with radiomics features. Radiomics features may, for example, be extracted from and/or inserted into the synthetic lesion image data. Radiomics features may further enhance a match between the image data and the added lesion. Corresponding information concerning radiomics features may be found, for example, in Jarrett, A.M., Kazerouni, A.S., Wu, C. et al. Quantitative magnetic resonance imaging and tumor forecasting of breast cancer patients in the community setting. Nat Protoc 16, 5309-5338 (2021).

According to an embodiment, different families of ranges of lesion shapes are obtained or generated, wherein the different families are classified according to lesion characteristics, such as lesion type, lesion aggressiveness, therapy response. Hence an image database of possible lesions may be augmented by providing the different families.

According to an embodiment, the organ image data comprises 3D (three-dimensional) organ image data or a stack of 2D (two-dimensional) organ image slices, wherein the trained generative machine learning model is adapted to receive 3D organ image data or a stack of 2D organ image slices, respectively, and, optionally, generate 3D synthetic lesion image data or a stack of 2D lesion image data, respectively. A stack of 2D organ image slices may also be denoted as 2.5 organ image data. For example, a GAN with 3D convolutional layers or a 2D latent diffusion model with positional embedding may be used. Advantageously, by using 2.5D or 3D image data and a generative machine learning model configured to work on 2.5D or 3D image data, a better control on lesion and organ shape and texture may be enabled. This enables a better consistency of the 3D structure of lesions and may increase realism of the generated synthetic lesion image data. In particular, a through-plane continuity may be improved, such as avoiding inconsistencies in the appearance of different slices of lesion image data. Optionally, the organ image data may comprise 4D (four-dimensional) organ image data, wherein the fourth dimension is in particular time. For example, a temporal, in particular cyclic, development of the organ and/or the lesion may thus be included. For example, ultra sound image data may show a beating heart and 4D image data may comprises the different phases of the heart.

According to an embodiment, real organ image data of an organ is received and, based on the real organ image data, synthetic organ image data is generated, wherein the synthetic lesion image data is generated based on the synthetic organ image data. The real organ image data may in particular be organ image data without a lesion. Advantageously, a greater amount of organ image data may thus be available due to synthetically generating the organ image data. For generating the synthetic organ image data, another trained generative machine learning model, in particular based on a GAN architecture or a latent diffusion model, may be applied.

According to an embodiment, an out-painting technique is applied to control a border area of the lesion in the synthetic lesion image data. The border area may be the area around the border between the lesion and the tissue surrounding the lesion. Advantageously, by applying the out-painting technique, a realistic transition between the lesion area and the surrounding area may be generated. The out-painting may be performed by a trained machine learning model. such as GAN. Optionally, the trained machine learning model may be the same as the one described herein. Hence, the trained machine learning model may be also configured to perform the out-painting. Alternatively an additional trained machine learning model and/or an additional function may be used for the out-painting. For example, for a solid tumour, with clearly visible boundary between tumour tissue and surrounding parenchyma, the out-painting may be based on applying the trained machine learning model within the lesion mask and a function, defining the image intensity transition from tumour tissue to parenchyma within a specific transition zone. For example, the function may be a linear function. For example, for a diffuse tumour with a diffuse and/or not clearly visible boundary between tumour tissue and surrounding parenchyma, the out-painting may be based on a central lesion mask covering the tumour core and an additional mask surrounding the tumour core that covers the diffuse transition between tumour core and parenchyma. In such scenario, the tumour core inpainting may be performed in a similar manner as in the case of a solid tumour. Furthermore, for the diffuse tumour, the transition may be inpainted, in particular via an algorithm dedicated to inpainting diffuse tumour boundaries directly.

According to another aspect of the invention, a computer program comprising instructions which, when the program is executed by a computer, cause the computer to carry out the method as described herein is provided. The instructions may comprise any of the method steps and their variants as described herein. For example, the computer program may be stored on a data storage medium, in particular a non-volatile data storage medium. The storage medium may be any computer-readable storage medium. For example, the storage medium may be a solid-state storage medium or an optical storage medium. The storage medium may be a hard-drive, a solid-state-disk, a compact disk, a DVD, a flash storage, an online server, etc.

According to another aspect of the invention, a method for generating training weights to be used in a software module comprising a machine learning algorithm, in particular generative machine learning algorithm, is provided. The training weights are generated by training the machine learning algorithm with synthetic lesion image data as obtained by the method for generating synthetic lesion image data as described herein. Optionally, non-synthetic image data may additionally be used for the training. Advantageously a greater data representativeness may be achieved by using the synthetic lesion image data. A machine learning algorithm and/or image processing device with these training weights may thus be more robust. Furthermore, thanks to the synthetic data, more training data may be used for training, which may lead to better training results.

According to another aspect of the invention, an image processing device comprising a trained generative machine learning algorithm that is trained with synthetic lesion image data as obtained by the method for generating synthetic lesion image data described herein is provided. For example, the trained generative machine learning algorithm may comprise the training weights as described herein. The trained machine learning algorithm may thus show an improved performance, in particular due to being trained with the synthetic image data. Optionally, the machine learning algorithm may be additionally trained with further image data, such as non-synthetic image data. In particular, the image processing device is configured to process lesion image data. For example, the image processing device may be configured to identify, diagnose, annotate, and/or segment lesions in lesion image data. The image processing device may be configured for matching multi-modality images generation. The image processing device may be configured to support the benchmark and/or illustration of cross-modality registration algorithms. Cross-modality registration algorithms are typical in many cancer treatment workflows. The image processing device may be configured to select and/or plan a therapy based on input lesion image data. Additionally, or alternatively, the image processing device may be configured to support a selection and/or planning of a therapy based on input lesion image data

According to another aspect of the invention, a computer program comprising synthetic lesion image data as obtained by the method described herein is provided. When the program is executed by a computer, the computer program is in particular configured to cause the computer to provide the synthetic lesion image data as demonstrational and/or educational data. For example, the computer program may be configured to provide a virtual training environment and/or a demonstration tool. The computer program may be configured to train users on specific systems and/or devices. For example, the computer program may be configured for teaching of site-specific workflows for at least one therapy, such as thermal ablation therapy. Such workflows often differ per clinical site, particularly for thermal ablation applications (e.g. radiofrequency or microwave percutaneous ablation). The computer program may be configured for teaching different appearances of lesion types, in particular tumour types, in relation to diagnosis and therapy selection. The computer program may comprise images with different classes and/or stages of lesions, in particular tumours. The computer program may comprise annotations to the lesions, such as annotations classifying the lesions.

According to another aspect of the invention, a use of data generated via a method as described herein for providing training data and/or for providing demonstrational data, in particular for education, is provided.

The features and advantages of different embodiments can be combined. The features and advantages of one aspect of the invention, e.g., the method, may be applied to the other aspects, e.g., computer program and the image processing device, and vice versa.

### BRIEF DESCRIPTION OF THE DRAWINGS

The invention shall now be illustrated by means of embodiments with reference to the attached drawings, in which:
Fig. 1 shows a flow diagram of a computer-implemented method for generating synthetic lesion image data according to an embodiment of the invention;
Fig. 2 shows a flow diagram of a computer-implemented method for generating lesion model data according to an embodiment of the invention; and
Fig. 3 shows a sketch of a user interface of a computer program according to an embodiment of the invention;

### DETAILED DESCRIPTION OF EMBODIMENTS

Throughout the figures, the same or corresponding features/elements of the various embodiments are designated with the same reference numbers.

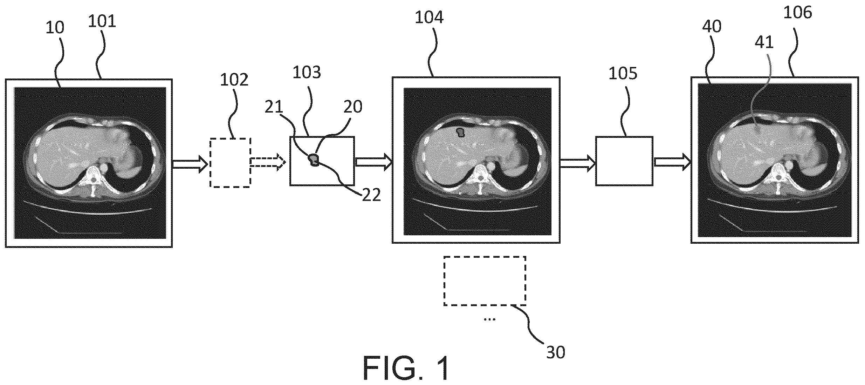

Fig. 1 shows a flow diagram of a computer-implemented method for generating synthetic lesion image data 40 according to an embodiment of the invention.

In a first step 101, organ image data 10 is received. In this example, the organ image data 10 that is shown is a slice of a 3D non-contrasted computed tomography image showing a liver. Generally, the method may be applied to any organ. The organ image data may, for example, be received via a user input or from a database.

In an optional step 102, based on the received real organ image data 10, synthetic organ image data may be generated for the further steps. The synthetic organ image data may allow to provide an even greater variety of synthetic lesion image data 40.

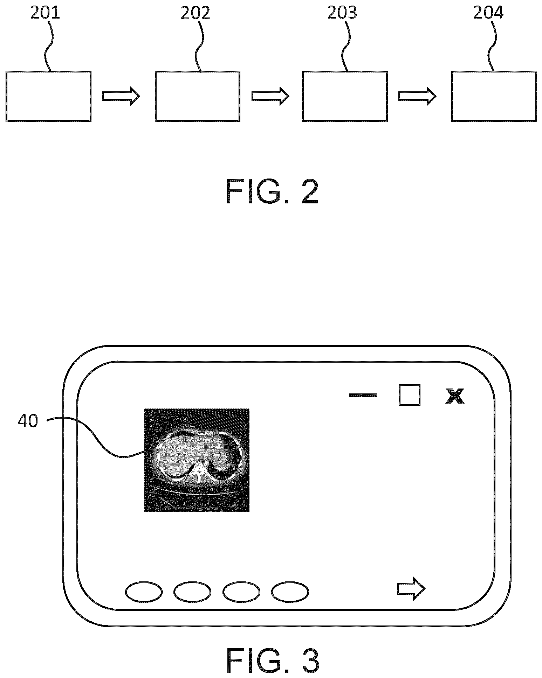

In a further step 103, lesion model data 20 is generated or obtained. The lesion model data 20 may be generated by a lesion modelling algorithm as part of the method. Alternatively, the lesion model may be obtained, e.g., as pre-generated lesion model data 20. In both cases, the lesion model data 20 is generated based on a collection of rules for lesion shapes and textures and/or based on a defined range of lesion shapes and textures. In this example, the lesion model data 20 is exemplarily shown as a lesion mask 21 having a grey lesion texture 22. Hence, preferably, the lesion model data 20 comprises a lesion mask 21 for inpainting the synthesis location and a texture condition 22 for the synthesis texture. The collection of rules may be based on literature knowledge about lesion shapes and textures. The literature knowledge may, in particular, comprise definitions of typical volumetric sizes, typical localisations within the target organ, and/or typical shape descriptors. The defined range of lesion shapes and textures may be based on a database of real lesion image data. For example, the lesion model data 20 may be based on an average lesion shape and a, intra-cohort shape variation extracted from real lesion image data. For example, a method as described with respect to Fig. 2 may be applied to generate the lesion model data 20. Optionally, the range of lesion shapes may be further based on an adaption derived from the collection of rules. Optionally, the lesion model data 20 may be further based on a lesion growth model such that the synthetic lesion image data 40 comprises a lesion 41 at a particular lesion growth state and/or after a particular treatment. For example, the lesion growth model may be combined with a treatment response model.

In a further step 104, the organ image data 10 and the lesion model data 20 are used as input for a trained generative machine learning model. In the corresponding image of the flow diagram, the organ image data 10 is exemplarily shown together with the lesion model data 20. The trained generative machine learning model may in particular be based on a conditioned Generative Adversarial Network architecture or a latent diffusion model. Preferably, the trained generative machine learning model is adapted to receive 3D organ image data or a stack of 2D organ image slices, respectively, and generate 3D synthetic lesion image data 40 or a stack of 2D synthetic lesion image data 40, respectively. Optionally, further input 30 comprising at least one additional condition may also be used for the trained generative machine learning model. The at least one additional condition may in particular comprise at least one inner-organ structure mask, a dependence of the organ texture on a medical condition, a virtual time point of the synthetic lesion image data 40, a lesion type or classification a lesion location that is generated based on a lesion location distribution or a lesion location probability map, and/or an organ boundary condition. For example, the virtual time point may be relative to a virtual occurrence relevant for lesion imaging, such as an applied injection of contrast agent.

In a further step 105, the trained generative machine learning model is applied on the organ image data 10 together with the lesion model data 20 to generate synthetic lesion image data 40 comprising at least one region with a lesion 41. For example, the lesion 41 may be inpainted into the organ image data 10. Optionally, for generating the synthetic lesion image data 40, an out-painting technique may be applied to control a border area of the lesion 41 in the synthetic lesion image data 40.

In a further step 106, the synthetic lesion image data 40 is provided. Optionally, the method may be applied multiple times, generating different families of ranges of lesion shapes. The different families may be classified according to lesion characteristics, such as lesion type, lesion aggressiveness, therapy response. Additionally or alternatively, a series of synthetic lesion image data 40 may be generated representing different growth states and/or treatment responses to different treatments and/or different treatment durations. For this purpose, the trained generative machine learning model may be applied multiple times on different lesion model data 20 based on the lesion growth model.

Fig. 2 shows a flow diagram of a computer-implemented method for generating lesion model data 20 according to an embodiment of the invention. The method is based on a database of real lesion image data comprising annotated lesion image data with annotated lesions. In a first step 201, the annotated lesions are represented as surface-based meshes. In a further step 202, an average lesion shape is computed based on the meshes in order to obtain an average shape prior. In a further step 203, it is registered from the meshes to the average shape prior in order to obtain registered annotated meshes defined in the coordinate system of the average shape prior. In a further step 204, based on the average shape prior and the registered annotated meshes, an intra-cohort shape variation is computed and a shape mask of the lesion model data 20 is defined according to the shape variation. The shape variation lies within a range of lesion shapes defined at least by the shapes of the annotated meshes.

Fig. 3 shows a sketch of a user interface of a computer program according to an embodiment of the invention. The computer program comprises synthetic lesion image data 40 obtained by a method as described with respect to Fig. 1. The computer program is configured to provide the synthetic lesion image data 40 as demonstrational and/or educational data via the user interface.

The above-discussion is intended to be merely illustrative of the present system and should not be construed as limiting the appended claims to any particular embodiment or group of embodiments. Accordingly, the specification and drawings are to be regarded in an illustrative manner and are not intended to limit the scope of the appended claims. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "an" or "a" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS

- 10: organ image data
- 20: lesion model data
- 21: lesion mask
- 22: texture condition
- 30: further input
- 40: synthetic lesion image data
- 41: lesion

## Claims

1. A computer-implemented method for generating synthetic lesion image data (40), the method comprising the following steps:
- receiving organ image data (10) of an organ;
- generating or obtaining lesion model data (20), the lesion model data (20) being generated based on a collection of rules for lesion shapes and textures and/or based on a defined range of lesion shapes and textures, wherein the lesion model data (20) comprises in particular a lesion mask (21), such as for the synthesis location, and a texture condition (22) for the synthesis texture;
- applying a trained generative machine learning model on the organ image data (10) together with the lesion model data (20) to generate synthetic lesion image data (40) comprising at least one region with a lesion (41);
- providing the synthetic lesion image data (40).

2. The method according to claim 1,
wherein the collection of rules is based on literature knowledge about lesion shapes and, optionally, textures and/or
wherein the defined range of lesion shapes and textures is based on a database of real lesion image data.

3. The method according to claim 2,
wherein the database of real lesion image data comprises annotated lesion image data with annotated lesions,
wherein generating the lesion model data (20), the lesion model data (20) comprising at least the lesion mask (21), comprises:
- representing the annotated lesions as surface-based meshes;
- computing an average lesion shape based on the meshes in order to obtain an average shape prior;
- registering from the meshes to the average shape prior in order to obtain registered annotated meshes defined in the coordinate system of the average shape prior;
- based on the average shape prior and the registered annotated meshes, computing an intra-cohort shape variation, wherein the shape variation lies within a range of lesion shapes defined at least by the shapes of the annotated meshes, wherein the lesion mask (21) is defined according to the shape variation.

4. The method according to claim 2 or 3,
wherein the range of lesion shapes is further based on an adaption derived from the collection of rules.

5. The method according to any one of claims 2 to 4,
wherein the lesion model data (20), in particular the lesion mask (21), is generated via a trained lesion-mask-generating machine learning model,
wherein the lesion-mask-generating machine learning model has been trained based on the database of real lesion image data,
wherein, optionally, the lesion-mask-generating machine learning model is a conditioned model adapted to apply lesion parameters as condition for the lesion mask (21) generation.

6. The method according to any one of the preceding claims
wherein the trained generative machine learning model is based on a conditioned Generative Adversarial Network architecture or a latent diffusion model.

7. The method according to any one of the preceding claims,
wherein a further input (30) for the trained generative machine learning model comprises at least one additional condition, the at least one additional condition comprising in particular one or more of the following:
- at least one inner-organ structure mask, optionally distinguishing different phases of contrast filling,
- the organ texture depending on a medical condition,
- a virtual time point of the synthetic lesion image data (40), the time point being relative to a virtual occurrence relevant for lesion imaging, such as an applied injection of contrast agent,
- a lesion type and/or classification,
- a lesion location that is generated based on a lesion location distribution and/or a lesion location probability map,
- an organ boundary condition, in particular a segmentation of the organ.

8. The method according to any one of the preceding claims,
wherein the lesion model data (20) is further based on a lesion growth model, optionally combined with a treatment response model, such that the synthetic lesion image data (40) comprises a lesion (41) at a particular lesion growth state and/or after a particular treatment,
wherein in particular a series of synthetic lesion image data (40) is generated representing different growth states and/or treatment responses to different treatments and/or different treatment durations by applying the trained generative machine learning model multiple times on different lesion model data (20) based on the lesion growth model.

9. The method according to any one of the preceding claims,
wherein different families of ranges of lesion shapes are obtained or generated, wherein the different families are classified according to lesion characteristics, such as lesion type, lesion aggressiveness, therapy response.

10. The method according to any one of the preceding claims,
wherein the organ image data (10) comprises 3D organ image data or a stack of 2D organ image slices,
wherein the trained generative machine learning model is adapted to receive 3D organ image data or a stack of 2D organ image slices, respectively, and, optionally, generate 3D synthetic lesion image data (40) or a stack of 2D synthetic lesion image data (40), respectively.

11. The method according to any one of the preceding claims,
wherein real organ image data (10) of an organ is received and, based on the real organ image data (10), synthetic organ image data (10) is generated, wherein the synthetic lesion image data (40) is generated based on the synthetic organ image data.

12. The method according to any one of the preceding claims,
wherein an out-painting technique is applied to control a border area of the lesion (41) in the synthetic lesion image data (40).

13. A computer program comprising instructions which, when the program is executed by a computer, cause the computer to carry out the method according to any one of the preceding claims.

14. An image processing device comprising a trained generative machine learning algorithm that is trained with synthetic lesion image data (40) as obtained by the method according to any one of claims 1 to 12.

15. A computer program comprising synthetic lesion image data (40) as obtained by the method according to any one of claims 1 to 12, wherein, when the program is executed by a computer, the computer program is in particular configured to cause the computer to provide the synthetic lesion image data (40) as demonstrational and/or educational data.
